(19) Europäisches Patentamt
European Patent Office
Office européen des brevets

(11) **EP 1 811 454 A2**

(12) **EUROPEAN PATENT APPLICATION**

(43) Date of publication:
**25.07.2007 Bulletin 2007/30**

(51) Int Cl.:
***G06T 5/00*** (2006.01)

(21) Application number: **07100248.9**

(22) Date of filing: **08.01.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **18.01.2006 KR 20060005577**

(71) Applicant: **SAMSUNG ELECTRONICS CO., LTD.**
**Suwon-si,**
**Gyeonggi-do 442-742 (KR)**

(72) Inventors:
• **Kim, Myung-jae**
**Gyeonggi-do (KR)**
• **Lee, Ho-seop**
**Gangnam-gu (KR)**
• **Kang, Jeong-woo**
**Gyeonggi-do (KR)**

(74) Representative: **Benson, Christopher**
**Appleyard Lees**
**15 Clare Road**
**Halifax HX1 2HY (GB)**

(54) **Edge area determining apparatus and edge area determining method**

(57) An edge area determining apparatus (100) for a still part of an image includes a pixel edge determining part (31) for determining a pixel edge area of a current frame and a pixel edge area of a previous frame in the unit of pixel, a block edge determining part (34) for dividing each of the current frame and the previous frame into a plurality of blocks, each of which comprises a plurality of pixels, and calculating block edge areas in the unit of block based on the pixel edge areas in each of the blocks, and an edge map generating part (38) for generating an edge map based on the calculated block edge areas.

FIG. 1

EP 1 811 454 A2

**Description**

The present invention relates to an edge area determining apparatus and an edge area determining method, and more particularly, to an edge area determining apparatus and an edge area determining method which are capable of determining an edge area of a still part of an image.

In general, a frame rate conversion (FRC) refers to converting a frequency of an input video signal to a frequency that matches an output format. For example, new interpolation frames are inserted between original frames to convert a video signal of 50 Hz into a video signal of 100 Hz.

In general, for such insertion of the interpolation frames, a frame rate converter estimates motion between a previous frame and a current frame to generate a motion vector, and generates an interpolation frame based on the generated motion vector.

However, a conventional frame rate converter estimates motion for even a still part of an image, such as characters and areas, which rest for a specified period of time, in an opaque logo, a translucent logo, an on-screen display, etc. Therefore, the conventional frame rate converter has a problem of poor quality of image due to deterioration in the still part of the image.

Accordingly, there is a need for the conventional frame rate converter to have an apparatus for determining an edge area of the still part of the image so as to detect the still part of the image. In addition, since a motion vector is typically calculated in the unit of block for each frame, such an edge area determining apparatus for the still part of the image needs to calculate the edge area of the still part of the image in the unit of block.

Some exemplary embodiments of the present invention may overcome the above disadvantages. Also, some exemplary embodiments of the present invention may overcome other problems not described above.

According to the present invention there is provided an apparatus and method as set forth in the appended claims. Preferred features of the invention will be apparent from the dependent claims, and the description which follows.

According to an aspect of the present invention, there is provided an edge area determining apparatus and an edge area determining method which are capable of determining an edge area of a still part of an image in the unit of block.

According to a first aspect of the present invention, there is provided an edge area determining apparatus for a still part of an image which includes a pixel edge determining part for determining a pixel edge area of a current frame and a pixel edge area of a previous frame in the unit of pixel, a block edge determining part for dividing each of the current frame and the previous frame into a plurality of blocks, each of which comprises a plurality of pixels, and calculating block edge areas in the unit of block based on the pixel edge areas in each of the blocks, and an edge map generating part for generating an edge map based on the calculated block edge areas.

Preferably, the pixel edge determining part determines pixels whose brightness variations are larger than a reference brightness level, to be the pixel edge areas.

Preferably, the block edge determining part comprises a horizontal edge determining part for calculating the number of pixel edge areas consecutive in a horizontal direction for each of the blocks and determining blocks whose calculated number of pixel edge areas is larger than a reference number, to be horizontal block edge areas.

Preferably, the horizontal edge determining part calculates the number of pixel edge areas consecutive in the horizontal direction in the current frame and the previous frame respectively and determines blocks whose calculated number of pixel edge areas provided at the same position of the previous frame and the current frame is calculated is larger than the reference number, to be the horizontal block edge areas.

Preferably, the block edge determining part comprises a cluster edge determining part for determining cluster block edge areas based on a degree of motion of the pixel edge areas provided in the current frame and the pixel edge areas provided in the previous frame for each block.

Preferably, the cluster edge determining part determines the degree of motion based on variation of the number of pixel edge areas provided in the current frame and the number of pixel edge areas provided in the previous frame for each block.

Preferably, the cluster edge determining part determines the cluster block edge areas based on the number of pixel edge areas included in each of the blocks of the current frame and each of the blocks of the previous frame and the number of pixel edge areas provided at the same position of the current frame and the previous frame.

Preferably, the cluster edge determining part determines blocks whose edge variations according to the following equation are larger than a reference value, to be the cluster block edge areas.

$$EdgeVariation = \frac{nEQUAL_B}{(nCPixel_B + nPPixel_B)/2}$$

where, $nEQUAL_B$ is the number of pixel edge areas of the block of the current frame and pixel edge areas of the block of the previous frame, which are provided at the same position, $nCPixel_B$ is the number of pixel edge areas included in the block of the current frame, and $nPPixel_B$ is the number of pixel edge areas included in the block of the previous frame.

Preferably, each of the blocks includes a plurality of sub-blocks, and wherein the cluster edge determining part calculates edge variations for the sub-blocks.

Preferably, the pixel edge determining part determines a plurality of pixel edge areas based on a plurality of reference brightness levels.

Preferably, the cluster edge determining part selects a reference brightness level at which the number of pixel edge areas according to the plurality of reference brightness levels for each block is within a specified range, and determines a block whose edge variation calculated based on the pixel edge area according to the selected reference brightness level is larger than the reference value, to be the cluster block edge area.

Preferably, the cluster edge determining part selects a reference brightness level at which the number of pixel edge areas according to the plurality of reference brightness levels for each block is within a specified range, determines a block to be the cluster block edge area when the edge variation calculated based on a pixel edge area according to the selected reference brightness level is larger than a first edge reference value, determines a block not to be the cluster block edge area when the edge variation is smaller than a second edge reference value, and makes a re-determination based on the pixel edge areas according to a separate reference brightness level when the edge variation lies between the first edge reference value and the second edge reference value.

Preferably, the block edge determining part comprises a vertical edge determining part for calculating the number of pixel edge areas consecutive in a vertical direction for each of the blocks and determining blocks whose calculated number of pixel edge areas is larger than a reference number, to be vertical block edge areas.

Preferably, the vertical edge determining part determines a block to be the vertical block edge area when the block comprises n × m pixels and m pixels included in at least one of n columns comprises the pixel edge area.

Preferably, if m pixels included in at least one of n columns comprises the pixel edge area, the vertical edge determining part determines a block whose edge variation is larger than the reference value, to be the vertical block edge area.

Preferably, the edge map generating part distinguishes block edge areas, with the horizontal edge determining part, the cluster edge determining part and the vertical edge determining part prioritized.

Preferably, the edge map generating part determines whether the block is the horizontal block edge area to set the block to be the horizontal block edge area, determines whether the block is the vertical block edge area to set the block to be the vertical block edge area if it is determined that the block is not the horizontal block edge area, and sets remaining blocks to be cluster block edge areas depending on whether the remaining blocks are cluster block edge areas.

Preferably, the still part of the image comprises at least one of a logo and an on-screen display picture.

According to a second aspect of the present invention, there is provided an edge area determining method for a still part of an image, which includes determining a pixel edge area of a current frame and a pixel edge area of a previous frame in the unit of pixel, dividing each of the current frame and the previous frame into a plurality of blocks, calculating block edge areas in the unit of block based on the pixel edge areas, and generating an edge map based on the calculated block edge areas.

Preferably, the determining the pixel edge areas comprises determining whether brightness variations between pixels are larger than a reference brightness level, if it is determined that the brightness variations between the pixels are larger than the reference brightness level, determining pixels whose brightness variations are larger than the reference brightness level, to be the pixel edge areas.

Preferably, the calculating the block edge areas comprises calculating the number of pixel edge areas consecutive in a horizontal direction for each of the blocks, and determining blocks whose calculated number of pixel edge areas is larger than a reference number, to be horizontal block edge areas.

Preferably, the calculating the block edge areas comprises determining cluster block edge areas based on a degree of motion of the pixel edge areas provided in the current frame and the pixel edge areas provided in the previous frame for each block.

Preferably, the determining the cluster block edge areas comprises determining the cluster block edge areas based on the number of pixel edge areas included in each of the blocks of the current frame and each of the blocks of the previous frame and the number of pixel edge areas provided at the same position of the current frame and the previous frame.

Preferably, each of the blocks includes a plurality of sub-blocks, and wherein the determining the cluster block edge areas comprises calculating edge variations for the sub-blocks.

Preferably, the determining the pixel edge areas includes determining a plurality of pixel edge areas based on a plurality of reference brightness levels, and wherein the determining the cluster block edge areas comprises selecting a reference brightness level at which the number of pixel edge areas according to the plurality of reference brightness levels for each block is within a specified range, determining a block to be the cluster block edge area when the edge variation calculated based on a pixel edge area according to the selected reference brightness level is larger than a first edge reference value, determining a block not to be the cluster block edge area when the edge variation is smaller than a second edge reference value, and making a re-determination based on the pixel edge areas according to a separate reference brightness level when the edge variation lies between the first edge reference value and the second edge reference value.

Preferably, the calculating the block edge areas includes calculating the number of pixel edge areas consecutive in a vertical direction for each of the blocks, and determining blocks whose calculated number of pixel edge areas is larger than a reference number, to be vertical block edge areas.

Preferably, the generating the edge map includes prioritizing the horizontal block edge areas, the vertical block edge areas, and the cluster block edge areas, and generating the edge map according to the priorities.

Preferably, the generating the edge map according to the priorities includes determining whether the block is the horizontal block edge area, if it is determined that the block is the horizontal block edge area, setting the block to be the horizontal block edge area, if it is determined that the block is not the horizontal block edge area, determining whether the block is the vertical block edge area, if it is determined that the block is the vertical block edge area, setting the block to be the vertical block edge area, and setting remaining blocks to be cluster block edge areas if it is determined that the remaining blocks are the cluster block edge areas.

For a better understanding of the invention, and to show how embodiments of the same may be carried into effect, reference will now be made, by way of example, to the accompanying diagrammatic drawings in which:

Figure 1 is a block diagram of an edge area determining apparatus according to an exemplary embodiment of the present invention;

Figure 2 is a detailed block diagram of an edge area determining part according to an exemplary embodiment of the present invention;

Figure 3A is a diagram illustrating pixel edge areas and areas other than the pixel edge areas for each pixel in one block of a previous frame according to an exemplary embodiment of the present invention;

Figure 3B is a diagram illustrating pixel edge areas and areas other than the pixel edge areas for each pixel in one block of a current frame according to an exemplary embodiment of the present invention;

Figure 4 is a flow chart illustrating operation of the edge area determining apparatus according to the an exemplary embodiment of the present invention; and

Figure 5 is a flow chart illustrating operation of a cluster edge determining part of the edge area determining part according to an exemplary embodiment of the present invention.

Reference will now be made in detail to exemplary embodiments of the present invention, examples of which are illustrated in the accompanying drawings.

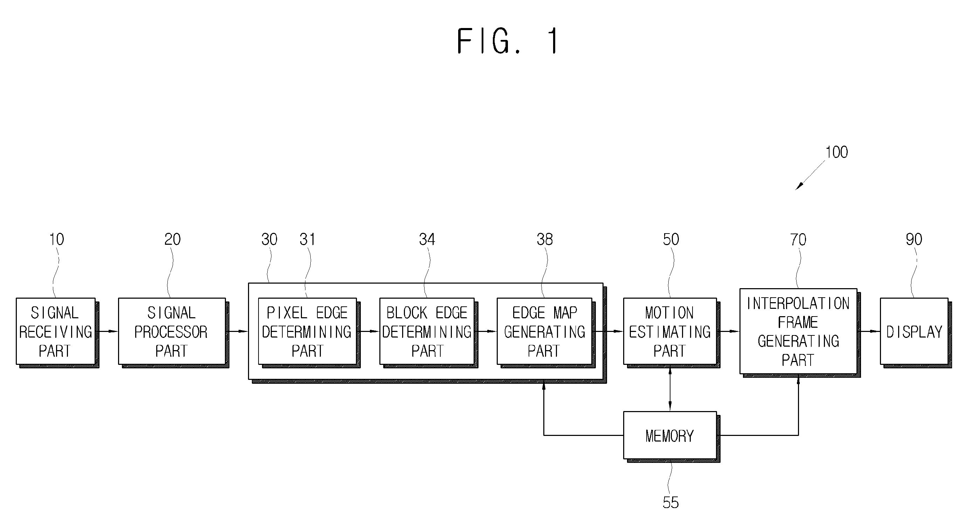

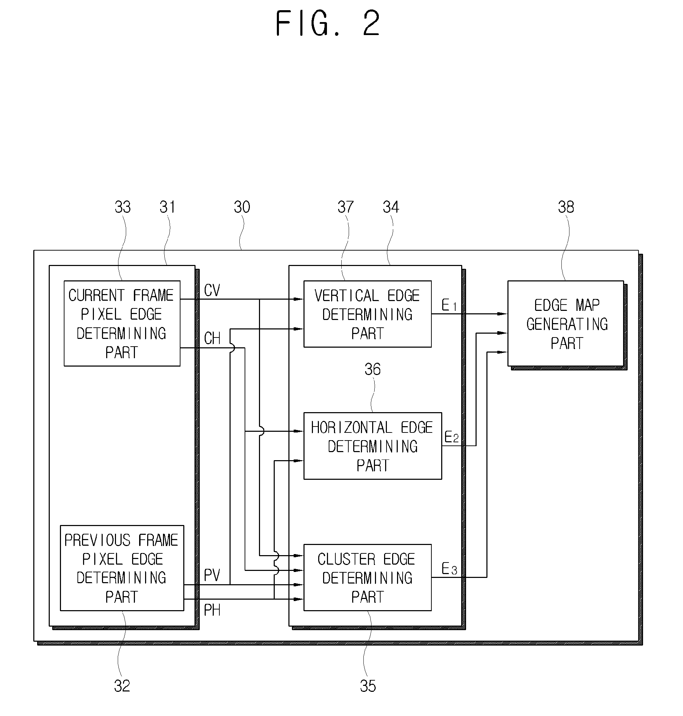

As shown in Figures 1 and 2, an edge area determining apparatus 100 according to an exemplary embodiment of the present invention includes an edge area determining part 30 including a pixel edge determining part 31, a block edge determining part 34, and an edge map generating part 38. In addition, the edge area determining apparatus 100 may include a signal receiving part 10, a signal processor part 20, a motion estimating part 50, a memory 55, an interpolation frame generating part 70, and a display 90.

The signal receiving part 10 receives a video signal from an external video source. The signal receiving part 10 may include terminals through which different video signals of different formats may be input, for example, but not limited to, at least one of a composite input terminal for composite signals, a S-video input terminal for S-video signals, a component input terminal for component signals, a PC input terminal for PC signals, and a TV input terminal for TV signals. The video signal received in the signal receiving part 10 is displayed on the display 90 for each frame.

The signal processing part 20 processes the video signal input from the signal receiving part 10 into a format which can be displayed on the display 90. The signal processing part 20 processes an image corresponding to the video signal such that the image can be displayed on the display 90, under control of a control unit (not shown).

Although it is shown in Figure 1 that the signal processing part 20 is placed at an input stage of the edge area determining part 30, it should be understood that the signal processing part 20 may be provided at an output stage of the interpolation frame generating part 70.

As mentioned above, the edge area determining part 30 includes the pixel edge determining part 31, the block edge determining part 34, and the edge map generating part 38.

The edge area determining part 30 determines an edge area of a still part of an image and outputs the determined edge area to the motion estimating part 50. The edge area output from the edge area determining part 30 serves as a reference for the motion estimator 50 to generate a motion vector. In this exemplary embodiment, the still part of the image may include a logo, an interface picture, etc.

In this exemplary embodiment, the logo includes at least one of an opaque logo and a translucent logo, and the interface picture may include various pictures, for example, an on-screen display (OSD) picture. In this case, edge areas, which are boundaries between the logo, the on-screen display picture, etc. and other pictures, are varied in their brightness. Accordingly, in this exemplary embodiment, in order to determine an edge area, the edge area determining part 30 may find an area whose brightness varies above a specified level.

The pixel edge determining part 31 determines an edge area of a still part of an image in the unit of pixel. The pixel edge determining part 31 determines edge areas of a current frame and a previous frame in the unit of pixel to set their respective pixel edge areas. In this case, the pixel edge determining part 31 may calculate the pixel edge areas based on information on the previous frame, which is stored in the memory 55, and input information on the current frame.

The pixel edge determining part 31 may calculate variations of brightness between pixels in the current frame and the previous frame respectively and determines pixels whose calculated variations of brightness exceed a reference brightness level, to be the above-mentioned pixel edge areas.

Referring to Figure 2, the pixel edge determining part 31 includes a current frame pixel edge determining part 33 for determining a pixel edge area of the current frame and a previous frame pixel edge determining part 32 for determining a pixel edge area of the previous frame.

The pixel edge determining part 31 may determine pixel edge areas based on a plurality of reference brightness levels.

For example, assuming that brightness variations are distributed within a range of from 0 to 10, a first reference brightness level is 7, a second reference brightness level is 5, and a third reference brightness level is 3. Here, the pixel edge determining part 31 may set pixels whose brightness variations are more than 7 to be 1 and pixels whose brightness variations are less than 7 to be 0 for all pixels of each frame for the first reference brightness level, and define the pixels set to be 1 as pixel edge areas. In addition, the pixel edge determining part 31 may set pixels whose brightness variations are more than 5 to be 1 and pixels whose brightness variations are less than 5 to be 0 for the second reference brightness level, and define the pixels set to be 1 as pixel edge areas. Further, the pixel edge determining part 31 may set pixels whose brightness variations are more than 3 to be 1 and pixels whose brightness variations are less than 3 to be 0 for the third reference brightness level, and define the pixels set to be 1 as pixel edge areas.

The block edge determining part 34 divides the current frame and the previous frame into a plurality of blocks, each of which includes a plurality of pixels, and calculates block edge areas in the unit of block based on the pixel edge areas in each block. That is, the block edge determining part 34 determines whether each block is an edge area and defines a block determined to be the edge area as a block edge area.

Referring to Figure 2 again, the block edge determining part 34 may include a horizontal edge determining part 36, a cluster edge determining part 35, and a vertical edge determining part 37.

The horizontal edge determining part 36 may calculate the number of consecutive pixel edge areas in a horizontal direction for each block and define blocks whose calculated number of pixel edge areas is more than a reference number as horizontal block edge areas.

The horizontal edge determining part 36 receives information CH on pixel edge areas in the horizontal direction for the current frame and information PH on pixel edge areas in the horizontal direction for the previous frame. Here, the information CH on pixel edge areas in the horizontal direction means information on pixel edge areas for each horizontal line of pixels in one frame.

The horizontal edge determining part 36 calculates consecutive pixel edge areas in the horizontal direction for each of the current frame and the previous frame. In addition, the horizontal edge determining part 36 compares the information CH on consecutive pixel edge areas in the horizontal direction for the current frame with the information PH on consecutive pixel edge areas in the horizontal direction for the previous frame. At this time, the horizontal edge determining part 36 calculates the number of pixel edge areas provided at the same position for each frame and defines blocks whose calculated number of pixel edge areas is more than a reference number as horizontal block edge areas.

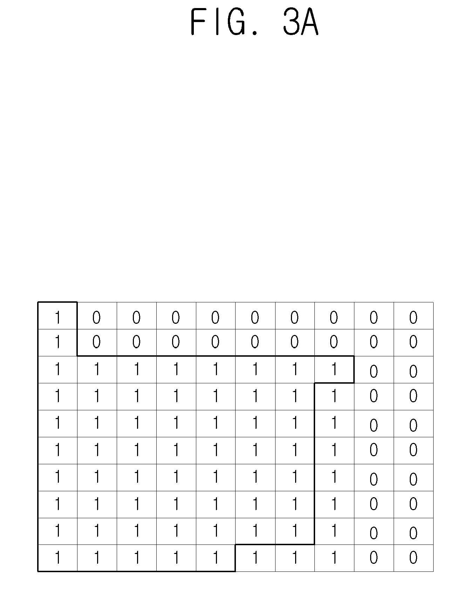

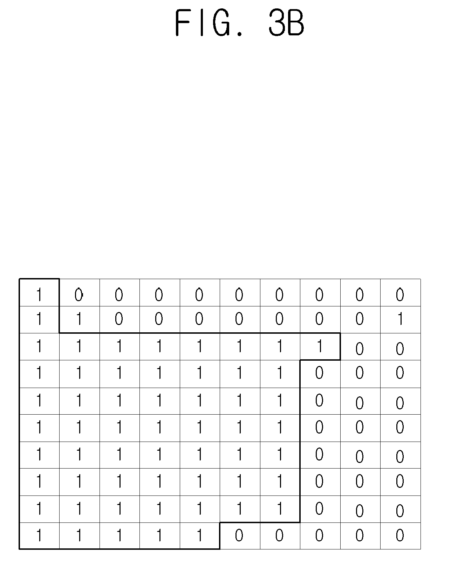

Now, the pixel edge areas will be described in more detail with reference to Figures 3A and 3B.

Figure 3A is a view showing one block of the previous frame, and Figure 3B is a view showing one block of the current frame. The blocks shown in Figures 3A and 3B are provided in a corresponding position to each other. It is assumed here that each block includes pixels in the form of a $10 \times 10$ matrix.

Referring to Figures 3A and 3B, each of first and second horizontal lines has one pixel edge area provided at the same position of the current frame and the previous frame.

In addition, a third horizontal line has 8 consecutive pixel edge areas provided at the same position thereof, each of fourth to ninth horizontal lines has 7 consecutive pixel edge areas provided at the same position thereof, and a tenth horizontal line has 5 consecutive pixel edge areas provided at the same position thereof.

In this case, 7 horizontal lines belong to a horizontal line pixel edge area, which consists of more than 6 consecutive pixel edge areas.

In this exemplary embodiment, if a block includes pixel edge areas which belong to the horizontal line pixel edge area and whose number is more than a specified number, the horizontal edge determining part 36 may define the block as a horizontal block edge area. For example, each of the blocks shown in Figures 3A and 3B includes 50 pixel edge areas belonging to the horizontal line pixel edge area. In this case, if the specified number is more than 50, the horizontal edge determining part 36 defines the block as the horizontal block edge area.

As an alternative exemplary embodiment, depending on whether the number of horizontal lines comprising a horizontal line pixel edge area is more than a specified number, the horizontal edge determining part 36 may define a corresponding block as a horizontal block edge area. In this case, the horizontal edge determining part 36 may calculate information on edge areas in the horizontal direction. The calculated information on edge areas in the horizontal direction may be properly used when a picture such as an OSD is displayed on the display 90.

After determining whether each block is the horizontal block edge area as described above, the horizontal edge determining part 36 outputs a result of the determination to the edge map generating part 38.

The cluster edge determining part 35 determines a cluster block edge area based on a degree of motion of pixel edge areas provided in the current frame for each block and pixel edge areas provided in the previous frame for each block. More specifically, the cluster edge determining part 35 may determine the degree of motion of the pixel edge areas based on variation of the number of pixel edge areas provided in the current frame for each block and pixel edge areas provided in the previous frame for each block.

The cluster edge determining part 35 may determine the cluster block edge area based on the number of pixel edge areas included in the block of the current frame and the block of the previous frame respectively and the number of pixel edge areas of the current frame and the previous frame, which are provided at the same position. In this case, the cluster edge determining part 35 may determine the cluster block edge area based on the information CH on consecutive pixel edge areas in the horizontal direction for the current frame, the information PH on consecutive pixel edge areas in the horizontal direction for the previous frame, information CV on consecutive pixel edge areas in a vertical direction for the current frame, and information PV on consecutive pixel edge areas in the vertical direction for the previous frame, all of which are input from the pixel edge determining part 31.

In this exemplary embodiment, the cluster edge determining part 35 may determine blocks whose edge variation, which is expressed by the following Equation 1, is more than a reference value as the cluster block edge area.

$$EdgeVariation = \frac{nEQUAL_B}{(nCPixel_B + nPPixel_B)/2} \qquad \text{... Equation 1}$$

where, $nEQUAL_B$ is the number of pixel edge areas of the block of the current frame and pixel edge areas of the block of the previous frame, which are provided at the same position, $nCPixel_B$ is the number of pixel edge areas included in the block of the current frame, and $nPPixel_B$ is the number of pixel edge areas included in the block of the previous frame.

Referring to Figures 3A and 3B, the number of pixel edge areas in the block of the previous frame, i.e., $nPPixel_B$, is 66, the number of pixel edge areas in the block of the current frame, i.e., $nCPixel_B$, is 59, and the number of pixel edge areas provided at the same position of each frame, i.e., $nEQUAL_B$, is 57. Thus, according to Equation 1, the edge variation becomes 55/61, i.e., about 0.99. In this case, the cluster edge determining part 35 determines the block to be the cluster block edge area if the reference value is 0.8, for example, and determines the block not to be the cluster block edge area if the reference value is 0.95, for example.

In addition, the cluster edge determining part 35 may divide each block into a plurality of sub-blocks and calculate edge variation for each sub-block. Furthermore, based on a result of the calculation, the cluster edge determining part 35 may determine whether the block is the cluster block edge area depending on whether the number of sub-blocks determined to be the cluster block edge area is more than a specified number.

Now, a case where a block is divided into, for example, four sub-blocks having $5 \times 5$ pixels will be described with reference to Figures 3A and 3B.

In the figures, $nPPixel_B$, $nCPixel_B$, and $nEQUAL_B$ of a sub-block in the left-top side are 17, 18, and 17, respectively. In this case, the edge variation is 34/35, i.e., about 0.97, according to Equation 1. $nPPixel_B$, $nCPixel_B$, and $nEQUAL_B$ of a sub-block in the left-bottom side are 25, 25, and 25, respectively. In this case, the edge variation is 1 according to Equation 1. $nPPixel_B$, $nCPixel_B$, and $nEQUAL_B$ of a sub-block in the right-top side are 9, 8, and 7, respectively. In this case, the edge variation is 14/17, i.e., about 0.82, according to Equation 1. $nPPixel_B$, $nCPixel_B$, and $nEQUAL_B$ of a sub-block in the right-bottom side are 15, 8, and 8, respectively. In this case, the edge variation is 16/23, i.e., about 0.69, according to Equation 1. Assuming the reference value is 0.8, the edge variation of three sub-blocks is larger than the reference value. Here, when the number of sub-blocks is more than 2, the block may be set to be the cluster block edge area. However, it can be changed by convenience of a designer.

As described above, when the pixel edge determining part 31 determines the plurality of pixel edge areas based on the plurality of reference brightness levels for brightness variation between pixels, the cluster edge determining part 35 may select one of the plurality of reference brightness levels and calculate a cluster block edge area based on a pixel edge area corresponding to the selected reference brightness level.

The cluster edge determining part 35 may select a reference brightness level at which the number of pixel edge areas is within a specified range, based on the plurality of pixel edge areas according to the plurality of reference brightness levels for the brightness variation between pixels, and determine a block whose edge variation calculated based on the pixel edge area according to the selected reference brightness level is larger than the reference value, to be the cluster block edge area.

Alternatively, the cluster edge determining part 35 may select a reference brightness level at which the number of pixel edge areas of the plurality of pixel edge areas according to the plurality of reference brightness levels for the brightness variation between pixels is within a specified range. In addition, the cluster edge determining part 35 determines a block to be the cluster block edge area when edge variation calculated based on a pixel edge area according to the selected reference brightness level is larger than a first edge reference value, and determines a block not to be the cluster block edge area when the edge variation is smaller than a second edge reference value. In this case, the cluster edge determining part 35 may make a re-determination based on the pixel edge areas according to a separate reference brightness level when the edge variation lies between the first edge reference value and the second edge reference value.

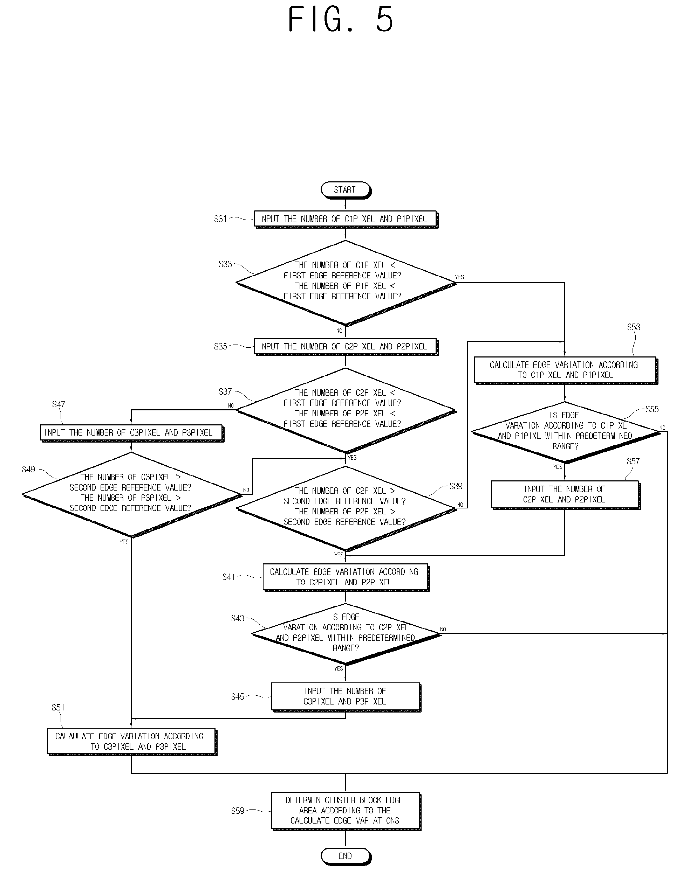

As illustrated in Figure 5, the cluster edge determining part 35 selects one of the plurality of reference brightness levels for the brightness variation between pixels and determines the edge variation according to the selected reference brightness level. If it is determined that the edge variation is within the specified range, the cluster edge determining part 35 determines whether the block is the cluster block edge area according to a different reference brightness level.

Figure 5 is a flow chart illustrating operation of a cluster edge determining part of the edge area determining part according to an exemplary embodiment of the present invention. With regard to Figure 5, it is assumed that the number of reference brightness levels for the brightness variation between pixels is 3, a pixel edge area of the previous frame calculated for each block according to the first reference brightness level is P1Pixel, a pixel edge area of the current frame calculated for each block according to the first reference brightness level is C1Pixel, a pixel edge area of the previous frame calculated for each block according to the second reference brightness level is P2Pixel, a pixel edge area of the current frame calculated for each block according to the second reference brightness level is C2Pixel, a pixel edge area of the previous frame calculated for each block according to the third reference brightness level is P3Pixel, and a pixel edge area of the current frame calculated for each block according to the third reference brightness level is C3Pixel.

In this exemplary embodiment, the first reference brightness level may be larger than the second reference brightness level and the second reference brightness level may be larger than the third reference brightness level. However, the respective reference brightness levels are not limited thereto. The cluster edge determining part 35 may perform operations of Figure 5 for each block itself or may divide each block into the plurality of sub-blocks and perform operations of Figure 5 for the sub-blocks, which will be described later.

As shown in Figure 5, the number of C1Pixels and the number of P1Pixels for each sub-block are input to the cluster edge determining part 35 at operation S31. Then, cluster edge determining part 35 compares the number of ClPixel and P1Pixel with the first edge reference value at operation S33. In this exemplary embodiment, the number of C1Pixel and P1Pixel may be compared with the same edge reference value and different edge reference values may be used for each comparison of the number of C1Pixel and the number of P1Pixel.

As a result of the comparison, if it is determined at operation S33 that the number of at least one of the C1Pixel and the P1Pixel is larger than the first edge reference value, the cluster edge determining part 35 reads the number of C2Pixel and the number of P2Pixel at operation S35. This is because it is difficult to make correct determination on a degree of motion of edge areas for sub-blocks having too many pixel edge areas.

The cluster edge determining part 35 compares the number of C2Pixel and P2Pixel with the first edge reference value at operation S37. As a result of the comparison, if it is determined at operation S37 that the number of at least one of the C2Pixel and the P2Pixel is larger than the first edge reference value, the cluster edge determining part 35 reads the number of C3Pixel and the number of P3Pixel at operation S47. Next, the cluster edge determining part 35 compares the number of read C3Pixel and P3Pixel with the second edge reference value at operation S49. In this case, the second edge reference value is smaller than the first edge reference value.

Here, the reason for the comparison of the number of C3Pixel and P3Pixel with the second edge reference value is that it is difficult to make correct determination on a degree of motion of edge areas for sub-blocks having too few pixel edge areas. As a result of the comparison, if it is determined at operation S49 that the number of C3Pixel is larger than the second edge reference value and the number of P3Pixel is larger than the second edge reference value, the cluster edge determining part 35 calculates edge variation according to the C3Pixel and P3Pixel at operation S51. Next, the cluster edge determining part 35 determines whether a corresponding sub-block is a cluster block edge area based on the calculated edge variation according to the C3Pixel and P3Pixel at operation S59.

On the other hand, if it is determined at operation S49 that the number of at least one of the C3Pixel and the P3Pixel is smaller than the second edge reference value, the cluster edge determining part 35 compares the number of C2Pixel and P2Pixel with the second edge reference value at operation S39. As a result of the comparison, if it is determined that the number of each C2Pixel and P2Pixel is larger than the second edge reference value, the cluster edge determining part 35 calculates edge variation according to the C2Pixel and P2Pixel at operation S41. If it is determined at operation S43 that the calculated edge variation according to the C2Pixel and P2Pixel is outside a specified range, the cluster edge determining part 35 determines whether the sub-block is the cluster block edge area based on the calculated edge variation at operation S59.

On the other hand, if it is determined at operation S43 that the calculated edge variation according to the C2Pixel and P2Pixel is within the specified range, the cluster edge determining part 35 reads the number of C3Pixel and the number of P3Pixel at operation S45, and calculates edge variation according to the C3Pixel and P3Pixel at operation S51. Next, the cluster edge determining part 35 determines whether a corresponding sub-block is the cluster block edge area based on the calculated edge variation according to the C3Pixel and P3Pixel at operation S59.

As a result of the comparison of the number of C2Pixel and P2Pixel with the first edge reference value, if it is determined at operation S37 that the number of C2Pixel and P2Pixel is smaller than the first edge reference value, the cluster edge determining part 35 compares the number of C2Pixel and P2Pixel with the second edge reference value at operation S39. As a result of the comparison, if it is determined that the number of C2Pixel and P2Pixel is larger than the second edge reference value, the cluster edge determining part 35 calculates edge variation according to the C2Pixel and P2Pixel at operation S41.

If it is determined at operation S43 that the calculated edge variation according to the C2Pixel and P2Pixel is outside the specified range, the cluster edge determining part 35 determines whether the sub-block is the cluster block edge area based on the calculated edge variation at operation S59. On the other hand, if it is determined at operation S43 that the calculated edge variation according to the C2Pixel and P2Pixel is within the specified range, the cluster edge determining part 35 reads the number of the C3Pixel and P3Pixel at operation S45. The cluster edge determining part 35 calculates the edge variation according to the C3Pixel and P3Pixel at operation S51 and determines whether the corresponding sub-block is the cluster block edge area based on the calculated edge variation according to the C3Pixel and P3Pixel at operation S59.

As a result of the comparison of the number of C1Pixel and P1Pixel with the first edge reference value, if it is determined at operation S33 that the number of C1Pixel and the number of P1Pixel are respectively smaller than the first edge reference value, the cluster edge determining part 35 calculates edge variation according to the C1Pixel and P1Pixel at operation S53. If it is determined at operation S55 that the calculated edge variation according to the C1Pixel and P1Pixel is outside a specified range, the cluster edge determining part 35 determines whether the corresponding sub-block is the cluster block edge area based on the calculated edge variation according to the C1Pixel and P1Pixel at operation S59.

If it is determined at operation S55 that the calculated edge variation according to the C1Pixel and P1Pixel is within the specified range, the cluster edge determining part 35 reads the number of the C2Pixel and P2Pixel at operation S57. The cluster edge determining part 35 calculates the edge variation according to the C2Pixel and P2Pixel at operation S41 and proceeds to the above-described subsequent operations, detailed explanation of which will be omitted.

In addition, the cluster edge determining part 35 compares the number of C2Pixel and P2Pixel with the second edge reference value. As a result of the comparison, if it is determined at operation S39 that the number of at least one of the C2Pixel and P2Pixel is smaller than the second edge reference value, the cluster edge determining part 35 calculates edge variation according to the C1Pixel and P1Pixel at operation S53 and proceeds to the above-described subsequent operations, detailed explanation of which will be omitted.

In this exemplary embodiment, it has been determined whether the edge variation in operations S43 and S55 is within the specified range. A case where the edge variation is within the specified range, for example, a range of a first lower limit to a second upper limit, has been described. In this case, if the edge variation is smaller than the first lower limit, a corresponding sub-block has a high degree of motion, and accordingly, will be determined not to be a cluster block edge area. On the contrary, if the edge variation is larger than the second upper limit, the corresponding sub-block has a low degree of motion, and accordingly, will be determined to be the cluster block edge area. When the cluster edge determining part 35 determines whether a sub-block is a cluster block edge area based on the third brightness reference value, it may determine whether the sub-block is the cluster block edge area depending on whether the edge variation based on the third brightness reference value is larger than a separate reference value without any determination on whether the edge variation is within the specified range.

In this manner, the cluster edge determining part 35 may make a determination on all sub-blocks whether they are the cluster block edge area, and determine whether a corresponding block is a cluster block edge area based on the number of sub-blocks corresponding to the cluster edge area.

The cluster edge determining part 35 determines whether each block is the cluster block edge area, and outputs a result of the determination to the edge map generating part 38.

The vertical edge determining part 37 calculates the number of consecutive pixel edge areas in the vertical direction and determines blocks having a calculated number of pixel edge areas larger than a reference number, to be a vertical block edge area.

The vertical edge determining part 37 may determine a block to be the vertical block edge area based on the information CV on consecutive pixel edge areas in the vertical direction for the current frame and the information PV on consecutive pixel edge areas in the vertical direction for the previous frame. Also, it is to be understood that the vertical edge determining part 37 may determine a block to be the vertical block edge area based on other information on pixel edge areas.

For example, assuming that each of blocks includes n × m pixels and m pixels included in at least one of n columns comprises a pixel edge area, the vertical edge determining part 37 may determine blocks having a number of columns, each of which has m pixels comprising a pixel edge area, larger than a reference number to be vertical block edge areas.

As another exemplary embodiment, the vertical edge determining part 37 may calculate edge variations in the same way as the cluster edge determining part 35 and determine blocks having calculated edge variations larger than a reference value and having a number of columns, each of which has m pixels comprising a pixel edge area, larger than a reference number to be vertical block edge areas.

Referring to Figures 3A and 3B, the number of pixel edge areas provided at the same position of the previous frame and current frame is calculated. In these figures, the number of pixel edge areas included in the same position in a first column of the previous frame and current frame is 10, the number of pixel edge areas included in the same position in a second column of the previous frame and current frame is 8, the number of pixel edge areas included in the same position in third to fifth columns of the previous frame and current frame is 8 respectively, the number of pixel edge areas included in the same position in sixth and seventh columns of the previous frame and current frame is 7 respectively, the number of pixel edge areas included in the same position in an eighth column of the previous frame and current frame is 1, and the number of pixel edge areas included in the same position in ninth and tenth columns of the previous frame and current frame is 0.

In this exemplary embodiment, the vertical edge determining part 37 may determine columns in which the number of pixel edge areas is larger than a specified number, and determine blocks in which the number of pixel edge areas included in a corresponding column is larger than a reference number to be vertical block edge areas. As another exemplary embodiment, the vertical edge determining part 37 may determine columns in which the number of pixel edge areas is larger than a specified number, and determine blocks in which the number of corresponding columns is larger than a reference number to be vertical block edge areas.

For example, referring to Figures 3A and 3B, the vertical edge determining part 37 may calculate the number of columns in which the number of pixel edge areas is 10, that is the number of pixel edge areas corresponds to the number of pixels included in a corresponding column. It is shown in Figures 3A and 3B that only the first column has 10 pixel edge areas. When the number of columns in which the number of pixel edge areas is 10 is larger than the reference number, the vertical edge determining part 37 may determine the block to be a vertical block edge area.

As described above, the vertical edge determining part 37 may determine blocks whose number of columns is larger than the reference number and whose edge variations according to Equation 1 are larger than a specified value to be vertical block edge areas. In this exemplary embodiment, like the cluster edge determining part 35, it is to be understood that the vertical edge determining part 37 also divides each block into a plurality of sub-blocks, calculates edge variations for each sub-block, and calculates the number of sub-blocks having edge variations larger than a reference value, based on the calculated edge variations.

The vertical edge determining part 37 determines whether each block is a vertical block edge area and outputs a result of the determination to the edge map generating part 38.

Based on the block edge area determined in the block edge determining part 34, the edge map generating part 38 generates an edge map for each block. In this exemplary embodiment, if the block edge determining part 34 determines the block edge area for each block using a plurality of methods, the edge map generating part 38 may generate the edge map with the methods prioritized.

As described above, when the block edge determining part 34 includes the horizontal edge determining part 36, the cluster edge determining part 35 and the vertical edge determining part 37, block edge areas can be distinguished from each other with these determining parts 36, 35 and 37 prioritized. In this case, the block edge areas include horizontal block edge areas, vertical block edge areas, and cluster block edge areas.

According to an exemplary embodiment of the present invention, if the horizontal edge determining part 36, the vertical edge determining part 37, and the cluster edge determining part 35 are prioritized in order, the edge map generating part 38 may generate the edge map according to the priorities.

The edge map generating part 38 determines whether each block is a horizontal block edge area. If it is determined that a block is the horizontal block edge area, the edge map generating part 38 sets the block to be a horizontal block edge area, and, if it is determined that the block is not the horizontal block edge area, determines whether the block is a vertical block edge area. If it is determined that the block is the vertical block edge area, the edge map generating part 38 sets the block to be a vertical block edge area. Then, the edge map generating part 38 sets remaining blocks, which are cluster block edge areas, to be cluster block edge areas.

The edge map generating part 38 determines whether an edge area is set for each block, and outputs a result of the determination to the motion estimating part 50.

The motion estimating part 50 calculates a motion vector using the current frame and the previous frame of the video signal and stores the calculated motion vector in the memory 55. In this case, a motion estimating part 50 estimates the motion vector used to compensate for motion using a block matching algorithm (BMA). According to the BMA, the motion estimating part 50 compares the current frame with the previous frame in the unit of block to estimate a motion vector per block.

In this exemplary embodiment, the motion estimating part 50 divides an image of the current frame Fn into blocks having a specified size and estimates a motion vector for each reference block, with each block as the reference block. In this case, the motion estimating part 50 may find blocks most similar to the reference block in a search region of the previous frame Fn-1 and estimate a motion vector based on a degree of spatial displacement between two blocks. In this case, the motion estimating part 50 may use a motion prediction error, such as SAD (sum of absolute difference) or MAD (mean absolute difference), to measure similarity between the reference block and the similar blocks in the search region.

In this exemplary embodiment, the motion estimating part 50 may process a block detected as a block edge areas in the edge area determining part 30 in correspondence to at least part of the still part of the image. For example, the motion estimating part 50 may apply a vector whose x-axis magnitude is 0 to a horizontal block edge area and a vector whose y-axis magnitude is 0 to a vertical block edge area. In addition, the motion estimating part 50 may be designed to apply a vector whose x and y-axis magnitude is 0 to a cluster block edge area.

The interpolation frame generating part 70 generates an interpolation frame based on the current frame and the previous frame. In this case, the interpolation frame generating part 70 may generate the interpolation frame based on the motion vector calculated in the motion estimating part 50 and stored in the memory 55, and then, outputs the generated interpolation frame to the display 90.

In this exemplary embodiment, the display 90 is input with a video signal received in the signal receiving part 10 and displays an image on a screen for each frame based on the input video signal. The display 90 includes a display module (not shown) on which the image is displayed and a module driver (not shown) for processing the input video signal to enable the image to be displayed on the display module.

In this exemplary embodiment, the display module may include various types of display modules such as, but not limited to, a CRT (Cathode Ray Tube), a DLP (Digital Light Processing), an LCD (Liquid Crystal Display), a PDP (Plasma Display Panel) and the like. In case where the display module is DLP, the module driver includes an optical engine. Where the display module is LCD, the module driver includes a printed circuit board for converting a video signal into a data signal and a gate signal. Similarly, according to the type of display module, the display 90 may have corresponding configuration of the module driver.

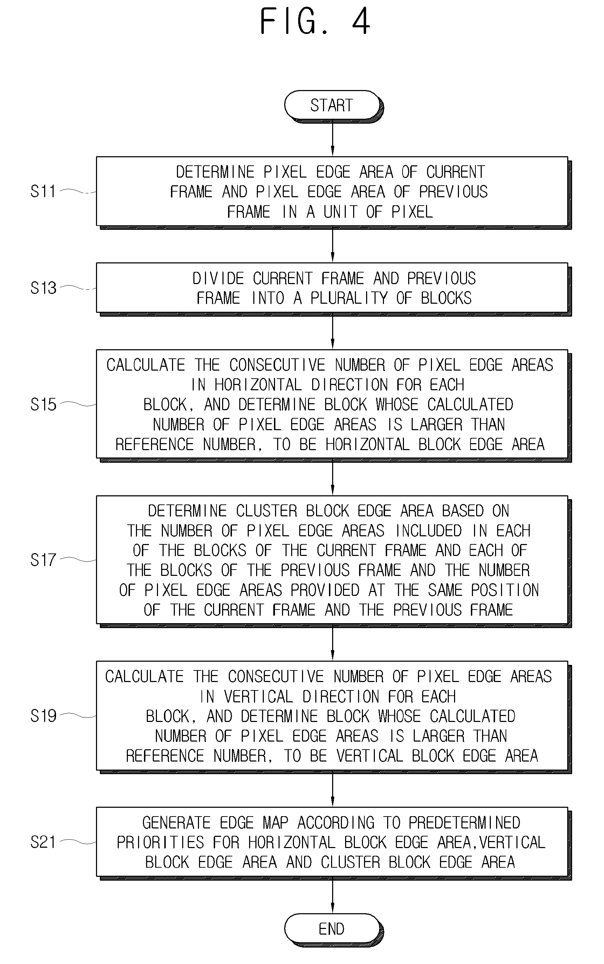

Now, a flow chart illustrating operation of the edge area determining apparatus according to the exemplary embodiment of the present invention will be described with reference Figure 4.

Referring to Figure 4, the pixel edge determining part 31 of the edge area determining apparatus according to the exemplary embodiment of the present invention determines a pixel edge area of the current frame and a pixel edge area of the previous frame in the unit of pixel at operation S11. The block edge determining part 34 divides the current frame and the previous frame into a plurality of blocks respectively at operation S13. In addition, the block edge determining part 34 determines whether a block is a block edge area in the unit of block based on the pixel edge area determined in the pixel edge determining part 31.

The block edge determining part 34 including the horizontal edge determining part 36 calculates the consecutive number of pixel edge areas in a horizontal direction for each block and determines blocks having a calculated number of pixel edge areas larger than a reference number to be horizontal block edge areas at operation S15. How to determine the blocks to be the horizontal block edge areas has been described above, and therefore, detailed explanation thereof will be here omitted.

Also, the block edge determining part 34 includes the cluster edge determining part 35. The cluster edge determining part 35 calculates the number of pixel edge areas included in each block of the current frame and the previous frame and also calculates the number of pixel edge areas provided at the same position of the previous frame and the current frame. Next, the cluster edge determining part 35 determines cluster block edge areas based on the calculated number of pixel edge areas at operation S17. How to determine the cluster block edge areas has been described above, and therefore, detailed explanation thereof will be here omitted.

In addition, the block edge determining part 34 includes the vertical edge determining part 37. The vertical edge determining part 37 calculates the number of pixel edge areas consecutive in a vertical direction in a corresponding block and determines blocks having a calculated number of pixel edge areas larger than a reference number to be vertical block edge areas at operation S19. In this case, the vertical edge determining part 37 may determine blocks having a calculated number of pixel edge areas and having edge variations larger than a reference value to be the vertical block edge areas. How to determine the blocks to be the vertical block edge areas has been described above, and therefore, detailed explanation thereof will be here omitted.

The edge map generating part 38 generates an edge map according to priorities, with the vertical block edge areas, the horizontal block edge areas and the cluster block edge areas prioritized, at operation S21.

Although it has been illustrated in the above exemplary embodiment that the block edge determining part 34 includes the horizontal edge determining part 36, the vertical edge determining part 37, and the cluster edge determining part 35, it is sufficient if the block edge determining part 34 includes at least one of the horizontal edge determining part 36, the vertical edge determining part 37, and the cluster edge determining part 35.

Although the pixel edge areas are set to be 1 and other areas are set to be 0, as shown in Figures 3A and 3B, this is only by way of an example and these edge areas may be set interchangeably.

Although it has been illustrated in the above exemplary embodiment that the pixel edge determining part 31 determines the pixel edge areas based on the three reference brightness levels, this is only by way of an example and it is sufficient if the pixel edge determining part 31 determines the pixel edge areas based on one or more reference brightness levels.

As described above, the edge area determining part 30 determines whether a block is a block edge area in the unit of block. The motion estimating part 50 also estimates a motion vector in the unit of block. Accordingly, the motion estimating part 50 may correctly estimate motion of an image using information on whether the block is a still part of an image in the unit of block, especially, information on the still part of the image.

As apparent from the above description, the present invention provides an edge area determining apparatus and an edge area determining method which are capable of determining an edge area of a still part of an image in the unit of block.

According to the edge area determining apparatus and the edge area determining method, a motion vector estimated in a motion estimator can be compensated without difficulty by determining the edge area of the still part of the image in the unit of block. Accordingly, deterioration of a picture which may occur in the still part of the image such as a logo or an OSD picture can be minimized.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. An edge area determining apparatus (100) for a still part of an image, the determining apparatus comprising:

   a pixel edge determining part (31) which determines a pixel edge area of a current frame and a pixel edge area of a previous frame in a unit of pixel;
   a block edge determining part (34) which divides each of the current frame and the previous frame into a plurality of blocks, each of which comprises a plurality of pixels, and calculating block edge areas in a unit of block based on the pixel edge areas in each of the plurality of blocks; and
   an edge map generating part (38) which generates an edge map based on the calculated block edge areas.

2. The edge area determining apparatus according to claim 1, wherein the pixel edge determining part (31) determines pixels having brightness variations larger than a reference brightness level to be the pixel edge areas.

3. The edge area determining apparatus according to claim 1 or 2, wherein the block edge determining part (34) comprises a horizontal edge determining part which calculates a number of consecutive pixel edge areas in a horizontal direction for each of the plurality of blocks and determines blocks having a calculated number of pixel edge areas larger than a reference number to be horizontal block edge areas.

4. The edge area determining apparatus according to claim 3, wherein the horizontal edge determining part calculates the number of consecutive pixel edge areas in the horizontal direction in the current frame and the previous frame, respectively, and determines blocks having the calculated number of pixel edge areas at the same position of the previous frame and the current frame larger than the reference number to be the horizontal block edge areas.

5. The edge area determining apparatus according to any of claims 1 to 4, wherein the block edge determining part (34) comprises a cluster edge determining part (35) which determines cluster block edge areas based on a degree of motion of the pixel edge areas in the current frame and the pixel edge areas in the previous frame for each block.

6. The edge area determining apparatus according to claim 5, wherein the cluster edge determining part (35) determines the degree of motion based on variation of the number of pixel edge areas in the current frame and the number of pixel edge areas in the previous frame for each block.

7. The edge area determining apparatus according to claim 5 or 6, wherein the cluster edge determining part (35) determines the cluster block edge areas based on the number of pixel edge areas in each of the blocks of the current frame and each of the blocks of the previous frame and the number of pixel edge areas at the same position of the current frame and the previous frame.

8. The edge area determining apparatus according to claim 7, wherein the cluster edge determining part (35) determines blocks having edge variations according to the following equation larger than a reference value to be the cluster block edge areas:

$$EdgeVariation = \frac{nEQUAL_B}{(nCPixel_B + nPPixel_B)/2} \quad .$$

where, $nEQUAL_B$ is the number of pixel edge areas of the block of the current frame and pixel edge areas of the block of the previous frame, which are provided at the same position, $nCPixel_B$ is the number of pixel edge areas included in the block of the current frame, and $nPPixel_B$ is the number of pixel edge areas included in the block of the previous frame.

9. The edge area determining apparatus according to claim 7 or 8, wherein each of the blocks comprises a plurality of sub-blocks, and wherein the cluster edge determining part (35) calculates edge variations for the sub-blocks.

10. The edge area determining apparatus according to any of claims 5 to 9, wherein the pixel edge determining part (31) determines a plurality of pixel edge areas based on a plurality of reference brightness levels.

11. The edge area determining apparatus according to claim 10, wherein the cluster edge determining part (35) selects a reference brightness level at which the number of pixel edge areas according to the plurality of reference brightness levels for each block is within a specified range, and determines a block whose edge variation calculated based on the pixel edge area according to the selected reference brightness level is larger than the reference value, to be the cluster block edge area.

12. The edge area determining apparatus according to claim 10 or 11, wherein the cluster edge determining part (35) selects a reference brightness level at which the number of pixel edge areas according to the plurality of reference brightness levels for each block is within a specified range, determines a block to be the cluster block edge area when the edge variation calculated based on a pixel edge area according to the selected reference brightness level is larger than a first edge reference value, determines a block not to be the cluster block edge area when the edge variation is smaller than a second edge reference value, and makes a re-determination based on the pixel edge areas according to a separate reference brightness level when the edge variation lies between the first edge reference value and the second edge reference value.

13. The edge area determining apparatus according to any preceding claim, wherein the block edge determining part (34) comprises a vertical edge determining part (37) which calculates the number of consecutive pixel edge areas in a vertical direction for each of the blocks and determines blocks having a calculated number of pixel edge areas larger than a reference value to be vertical block edge areas.

14. The edge area determining apparatus according to claim 13, wherein the vertical edge determining part determines a block to be the vertical block edge area when the block comprises n × m pixels and m pixels in at least one of n columns comprises the pixel edge area.

15. The edge area determining apparatus according to claim 14, wherein, if m pixels in at least one of n columns comprises the pixel edge area, the vertical edge determining part determines a block whose edge variation is larger than the reference value, to be the vertical block edge area.

16. The edge area determining apparatus according to claim 13, 14 or 15, wherein the edge map generating part (38) distinguishes block edge areas with the horizontal edge determining part, the cluster edge determining part (35) and the vertical edge determining part prioritized.

17. The edge area determining apparatus according to any of claims 13 to 16, wherein the edge map generating part (38) sets the block to be the horizontal block edge area if it is determined that the block is the horizontal block edge area to, sets the block to be the vertical block edge area if it is determined that the block is not the horizontal block edge area, and sets remaining blocks to be cluster block edge areas if the remaining blocks are cluster block edge areas.

18. The edge area determining apparatus according to any preceding claim, wherein the still part of the image comprises at least one of a logo and an on-screen display picture.

19. An edge area determining method for a still part of an image, comprising:

   determining a pixel edge area of a current frame and a pixel edge area of a previous frame in a unit of pixel;
   dividing each of the current frame and the previous frame into a plurality of blocks;
   calculating block edge areas in a unit of block based on the pixel edge areas; and
   generating an edge map based on the calculated block edge areas.

20. The edge area determining method according to claim 19, wherein the determining the pixel edge areas comprises:

   determining whether brightness variations between pixels are larger than a reference brightness level;
   determining pixels whose brightness variations are larger than the reference brightness level to be the pixel edge areas if it is determined that the brightness variations between the pixels are larger than the reference brightness level.

21. The edge area determining method according to claim 19 or 20, wherein the calculating the block edge areas comprises:

   calculating a number of consecutive pixel edge areas in a horizontal direction for each of the blocks; and
   determining blocks having the calculated number of pixel edge areas larger than a reference number to be horizontal block edge areas.

22. The edge area determining method according to claim 19, 20 or 21, wherein the calculating the block edge areas comprises determining cluster block edge areas based on a degree of motion of the pixel edge areas provided in the current frame and the pixel edge areas provided in the previous frame for each block.

23. The edge area determining method according to any of claims 19 to 22, wherein the determining the cluster block edge areas comprises determining the cluster block edge areas based on the number of pixel edge areas included in each of the blocks of the current frame and each of the blocks of the previous frame and the number of pixel edge areas at the same position of the current frame and the previous frame.

**24.** The edge area determining method according to any of claims 19 to 23, wherein each of the blocks comprises a plurality of sub-blocks, and wherein the determining the cluster block edge areas comprises calculating edge variations for the sub-blocks.

**25.** The edge area determining method according to claim 24, wherein the determining the pixel edge areas comprises determining a plurality of pixel edge areas based on a plurality of reference brightness levels, and wherein the determining the cluster block edge areas comprises:

> selecting a reference brightness level at which the number of pixel edge areas according to the plurality of reference brightness levels for each block is within a specified range;
> determining a block to be the cluster block edge area when the edge variation calculated based on a pixel edge area according to a selected reference brightness level is larger than a first edge reference value;
> determining a block not to be the cluster block edge area when the edge variation is smaller than a second edge reference value; and
> making a re-determination based on the pixel edge areas according to a separate reference brightness level when the edge variation lies between the first edge reference value and the second edge reference value.

**26.** The edge area determining method according to any of claims 22 to 24, wherein the calculating the block edge areas comprises:

> calculating the number of consecutive pixel edge areas in a vertical direction for each of the blocks; and
> determining blocks whose calculated number of pixel edge areas is larger than a reference number to be vertical block edge areas.

**27.** The edge area determining method according to claim 26, wherein the generating the edge map comprises:

> prioritizing horizontal block edge areas, the vertical block edge areas, and the cluster block edge areas; and
> generating the edge map according to the priorities.

**28.** The edge area determining method according to claim 27, wherein the generating the edge map according to the priorities comprises:

> determining whether the block is the horizontal block edge area;
> setting the block to be the horizontal block edge area if it is determined that the block is the horizontal block edge area;
> if it is determined that the block is not the horizontal block edge area, determining whether the block is the vertical block edge area;
> setting the block to be the vertical block edge area if it is determined that the block is the vertical block edge area; and
> setting remaining blocks to be cluster block edge areas if it is determined that the remaining blocks are the cluster block edge areas.

FIG. 1

# FIG. 2

# FIG. 3A

| 1 | 0 | 0 | 0 | 0 | 0 | 0 | 0 | 0 | 0 |
|---|---|---|---|---|---|---|---|---|---|
| 1 | 0 | 0 | 0 | 0 | 0 | 0 | 0 | 0 | 0 |
| 1 | 1 | 1 | 1 | 1 | 1 | 1 | 1 | 0 | 0 |
| 1 | 1 | 1 | 1 | 1 | 1 | 1 | 1 | 0 | 0 |
| 1 | 1 | 1 | 1 | 1 | 1 | 1 | 1 | 0 | 0 |
| 1 | 1 | 1 | 1 | 1 | 1 | 1 | 1 | 0 | 0 |
| 1 | 1 | 1 | 1 | 1 | 1 | 1 | 1 | 0 | 0 |
| 1 | 1 | 1 | 1 | 1 | 1 | 1 | 1 | 0 | 0 |
| 1 | 1 | 1 | 1 | 1 | 1 | 1 | 1 | 0 | 0 |
| 1 | 1 | 1 | 1 | 1 | 1 | 1 | 1 | 0 | 0 |

# FIG. 3B

| 1 | 0 | 0 | 0 | 0 | 0 | 0 | 0 | 0 | 0 |
|---|---|---|---|---|---|---|---|---|---|
| 1 | 1 | 0 | 0 | 0 | 0 | 0 | 0 | 0 | 1 |
| 1 | 1 | 1 | 1 | 1 | 1 | 1 | 1 | 0 | 0 |
| 1 | 1 | 1 | 1 | 1 | 1 | 1 | 0 | 0 | 0 |
| 1 | 1 | 1 | 1 | 1 | 1 | 1 | 0 | 0 | 0 |
| 1 | 1 | 1 | 1 | 1 | 1 | 1 | 0 | 0 | 0 |
| 1 | 1 | 1 | 1 | 1 | 1 | 1 | 0 | 0 | 0 |
| 1 | 1 | 1 | 1 | 1 | 1 | 1 | 0 | 0 | 0 |
| 1 | 1 | 1 | 1 | 1 | 1 | 1 | 0 | 0 | 0 |
| 1 | 1 | 1 | 1 | 1 | 0 | 0 | 0 | 0 | 0 |

# FIG. 4

START

S11 — DETERMINE PIXEL EDGE AREA OF CURRENT FRAME AND PIXEL EDGE AREA OF PREVIOUS FRAME IN A UNIT OF PIXEL

S13 — DIVIDE CURRENT FRAME AND PREVIOUS FRAME INTO A PLURALITY OF BLOCKS

S15 — CALCULATE THE CONSECUTIVE NUMBER OF PIXEL EDGE AREAS IN HORIZONTAL DIRECTION FOR EACH BLOCK, AND DETERMINE BLOCK WHOSE CALCULATED NUMBER OF PIXEL EDGE AREAS IS LARGER THAN REFERENCE NUMBER, TO BE HORIZONTAL BLOCK EDGE AREA

S17 — DETERMINE CLUSTER BLOCK EDGE AREA BASED ON THE NUMBER OF PIXEL EDGE AREAS INCLUDED IN EACH OF THE BLOCKS OF THE CURRENT FRAME AND EACH OF THE BLOCKS OF THE PREVIOUS FRAME AND THE NUMBER OF PIXEL EDGE AREAS PROVIDED AT THE SAME POSITION OF THE CURRENT FRAME AND THE PREVIOUS FRAME

S19 — CALCULATE THE CONSECUTIVE NUMBER OF PIXEL EDGE AREAS IN VERTICAL DIRECTION FOR EACH BLOCK, AND DETERMINE BLOCK WHOSE CALCULATED NUMBER OF PIXEL EDGE AREAS IS LARGER THAN REFERENCE NUMBER, TO BE VERTICAL BLOCK EDGE AREA

S21 — GENERATE EDGE MAP ACCORDING TO PREDETERMINED PRIORITIES FOR HORIZONTAL BLOCK EDGE AREA, VERTICAL BLOCK EDGE AREA AND CLUSTER BLOCK EDGE AREA

END

# FIG. 5

START

S31 — INPUT THE NUMBER OF C1PIXEL AND P1PIXEL

S33 — THE NUMBER OF C1PIXEL < FIRST EDGE REFERENCE VALUE? THE NUMBER OF P1PIXEL < FIRST EDGE REFERENCE VALUE?

YES → 

NO

S35 — INPUT THE NUMBER OF C2PIXEL AND P2PIXEL

S53 — CALCULATE EDGE VARIATION ACCORDING TO C1PIXEL AND P1PIXEL

S37 — THE NUMBER OF C2PIXEL < FIRST EDGE REFERENCE VALUE? THE NUMBER OF P2PIXEL < FIRST EDGE REFERENCE VALUE?

NO

YES

S47 — INPUT THE NUMBER OF C3PIXEL AND P3PIXEL

S55 — IS EDGE VARATION ACCORDING TO C1PIXL AND P1PIXL WITHIN PREDETERMINED RANGE?

YES

NO

S57 — INPUT THE NUMBER OF C2PIXEL AND P2PIXEL

S49 — THE NUMBER OF C3PIXEL > SECOND EDGE REFERENCE VALUE? THE NUMBER OF P3PIXEL > SECOND EDGE REFERENCE VALUE?

NO

YES

S39 — THE NUMBER OF C2PIXEL > SECOND EDGE REFERENCE VALUE? THE NUMBER OF P2PIXEL > SECOND EDGE REFERENCE VALUE?

NO

YES

S41 — CALCULATE EDGE VARIATION ACCORDING TO C2PIXEL AND P2PIXEL

S43 — IS EDGE VARATION ACCORDING TO C2PIXEL AND P2PIXEL WITHIN PREDETERMINED RANGE?

NO

YES

S45 — INPUT THE NUMBER OF C3PIXEL AND P3PIXEL

S51 — CALAULATE EDGE VARIATION ACCORDING TO C3PIXEL AND P3PIXEL

S59 — DETERMIN CLUSTER BLOCK EDGE AREA ACCORDING TO THE CALCULATE EDGE VARIATIONS

END